# EUROPEAN PATENT APPLICATION

(11) **EP 2 481 785 A1**
(43) Date of publication of application: **01.08.2012**
(21) Application number: 12002309.8
(22) Date of filing: 17.11.2010
(51) Int. Cl.: C09J 7/02

(54) **Pressure-sensitive adhesive sheet**

(30) Priority: 18.11.2009 JP 2009262805
(62) Divisional of application: 10191452.1
(71) Applicant: Nitto Denko Corporation, Osaka 567-8680 (JP)
(72) Inventor: Uesugi, Masanori, Ibaraki-shi Osaka 567-8680 (JP); Nakagawa, Yoshio, Ibaraki-shi Osaka 567-8680 (JP); Suzuki, Hidenori, Ibaraki-shi Osaka 567-8680 (JP); Kai, Makoto, Ibaraki-shi Osaka 567-8680 (JP); Oosawa, Yuka, Ibaraki-shi Osaka 567-8680 (JP); Yamamoto, Yasunori, Ibaraki-shi Osaka 567-8680 (JP)
(74) Representative: Grünecker, Kinkeldey, Stockmair & Schwanhäusser

(57) **Abstract**

The present invention relates to a pressure-sensitive adhesive sheet including: a substrate layer including a film which contains at least a urethane polymer; and a pressure-sensitive adhesive layer disposed on at least one side of the substrate layer, in which the pressure-sensitive adhesive sheet has a residual stress of 23 N/cm or lower after having been held in a 10% elongated state for 60 seconds, and wherein the substrate layer has on at least one side thereof, a surface coating layer comprising a fluororesin, a urethane resin or a (meth)acrylic resin.

## Description

### FIELD OF THE INVENTION

The present invention relates to a pressure-sensitive adhesive sheet having a substrate including a film containing at least a urethane polymer. In particular, the invention relates to a pressure-sensitive adhesive sheet having satisfactory flexibility.

### BACKGROUND OF THE INVENTION

Films constituted of both an acrylic polymer and a urethane polymer are disclosed, for example, in JP-A-2003-96140, JP-A-2003-171411, and JP-A-2004-10662 as films capable of combining high strength and high breaking elongation. Although these films themselves have toughness with high strength, high breaking elongation, etc., use of the films as the substrate of a pressure-sensitive adhesive sheet for coating surface protection, for example, for automotive coatings has had a problem that the films themselves have insufficient flexibility (in particular, suitability for bending and adhesiveness to curved areas).

| | |
|---|---|
| Patent Document 1 | JP-A-2003-96140 |
| Patent Document 2 | JP-A-2003-171411 |
| Patent Document 3 | JP-A-2004-10661 |

### SUMMARY OF THE INVENTION

The invention has been achieved in order to overcome the problem. An object of the invention is to provide a pressure-sensitive adhesive sheet which has satisfactory flexibility, is easy to bend, and has satisfactory adhesiveness to curved areas.

Namely, the present invention relates to the following (1) to (15).
(1) A pressure-sensitive adhesive sheet including: a substrate layer including a film which contains at least a urethane polymer; and a pressure-sensitive adhesive layer disposed on at least one side of the substrate layer,
   in which the pressure-sensitive adhesive sheet has a residual stress of 23 N/cm or lower after having been held in a 10% elongated state for 60 seconds.
(2) The pressure-sensitive adhesive sheet according to (1), in which the film is a composite film including a (meth)acrylic polymer and the urethane polymer.
(3) The pressure-sensitive adhesive sheet according to (2), in which the composite film has a heterogeneous network structure constituted of the (meth)acrylic polymer and the urethane polymer.
(4) The pressure-sensitive adhesive sheet according to (2) or (3), in which the (meth)acrylic polymer is produced using an acrylic ingredient which includes at least a (meth)acrylic acid monomer and a monofunctional (meth)acrylic monomer.
(5) The pressure-sensitive adhesive sheet according to (4), in which the monofunctional (meth)acrylic monomer includes a monofunctional (meth)acrylic monomer which gives a homopolymer having a glass transition temperature (Tg) of 0°C or higher.
(6) The pressure-sensitive adhesive sheet according to (4) or (5), in which the acrylic ingredient further includes a monofunctional (meth)acrylic monomer which gives a homopolymer having a glass transition temperature (Tg) lower than 0°C.
(7) The pressure-sensitive adhesive sheet according to any one of (4) to (6), in which the (meth)acrylic acid monomer is a (meth)acrylic monomer having a carboxyl goup.
(8) The pressure-sensitive adhesive sheet according to any one of (2) to (7), in which the composite film is formed from a composite film precursor including the (meth)acrylic acid monomer and the urethane polymer, and the (meth)acrylic acid monomer is contained in an amount of 1% by weight or more and 15% by weight or less in the composite film precursor.
(9) The pressure-sensitive adhesive sheet according to any one of (1) to (8), which has a 100% modulus at 23°C of 8 N/cm or higher.
(10) The pressure-sensitive adhesive sheet according to any one of (1) to (9), in which the substrate layer has, on at least one side thereof, a surface coating layer including a fluororesin, a urethane resin or a (meth)acrylic resin.
(11) The pressure-sensitive adhesive sheet according to any one of (1) to (10), which has a breaking strength of 40 N/cm or higher.
(12) The pressure-sensitive adhesive sheet according to any one of (1) to (11), which has an adhesion strength to an acrylic plate of 3 N/cm or higher.
(13) The pressure-sensitive adhesive sheet according to any one of (1) to (12), which has an application sheet on at least one side of the pressure-sensitive adhesive sheet.
(14) The pressure-sensitive adhesive sheet according to (13), in which an adhesion strength between the application sheet and the substrate layer is 6 N/25 mm or lower.
(15) The pressure-sensitive adhesive sheet according to any one of (1) to (14), which is to be used as a protective sheet for protecting a surface of an adherend.

According to the invention, a pressure-sensitive adhesive sheet having excellent flexibility can be realized. This pressure-sensitive adhesive sheet has excellent flexibility for bending and curved areas, and has excellent adhesiveness to curved areas, etc.

### DETAILED DESCRIPTION OF THE INVENTION

The invention is explained below in detail.
The pressure-sensitive adhesive sheet of the invention includes a substrate layer and a pressure-sensitive adhesive layer. The pressure-sensitive adhesive sheet must have a residual stress of 23 N/cm or lower after having been held in a 10% elongated state for 60 seconds. This residual stress will be described later.

The substrate layer as a component of the pressure-sensitive adhesive sheet of the invention includes a film containing at least a urethane polymer. It is preferred that this film is a composite film.
The film is a film including at least a urethane polymer, and is either a film of a urethane polymer alone or a composite film further containing other polymer(s). It is preferred in the invention that the composite film includes a (meth)acrylic polymer and a urethane polymer. In this case, the weight ratio of the (meth)acrylic polymer to the urethane polymer in the composite film is preferably in such a range that the (meth)acrylic polymer/urethane polymer ratio is from 1/99 to 80/20. When the proportion of the (meth)acrylic polymer is lower than 1/99, there are cases where the precursor mixture has an increased viscosity and have impaired workability. When the proportion thereof exceeds 80/20, there are cases where the film itself has poor flexibility and strength.

In the invention, it is preferred that the (meth)acrylic polymer is produced using an acrylic ingredient including at least a (meth)acrylic acid monomer and a monofunctional (meth)acrylic monomer. It is especially preferred to use,as the monofunctional (meth)acrylic monomer, a monofunctional (meth)acrylic monomer which gives a homopolymer having a glass transition temperature (Tg) of 0°C or higher. Furthermore, it is preferred that the (meth)acrylic polymer in the invention is produced using the acrylic ingredient which further includes a monofunctional (meth)acrylic monomer which gives a homopolymer having a glass transition temperature (Tg) lower than 0°C.

The term (meth)acrylic acid monomer used in the invention means a (meth)acrylic monomer having a carboxyl group, and examples thereof include acrylic acid, methacrylic acid, maleic acid, and crotonic acid. Especially preferred of these is acrylic acid. In the invention, when the composite film is formed from a composite film precursor including a (meth)acrylic acid monomer and a urethane polymer, it is preferred that the content of the (meth)acrylic acid monomer is 1% by weight or more and 15% by weight or less, especially 2% by weight or more and 10% by weight or less, in the composite film precursor. In case where the content of the (meth)acrylic acid monomer is lower than 1% by weight, the reaction necessitates a prolonged time period and film formation is exceedingly difficult. In addition, there are even cases where the resultant film has insufficient strength. When the content of the (meth)acrylic acid monomer exceeds 15% by weight, there are cases where the film has increased water absorption to pose a problem concerning water resistance. In the case where the composite film includes a (meth)acrylic polymer and a urethane polymer, the (meth)acrylic acid monomer considerably influences compatibility between the urethane component and the acrylic component, and is an essential constituent element which performs a crucially important function.
The term "film" as used in the invention means a conception which includes a sheet, while the term "sheet" means a conception which includes a film. The expression "(meth)acrylic" used in the invention as in, for example, "(meth)acrylic polymer" or "(meth)acrylic acid monomer" means a conception which includes both "methacrylic" and "acrylic". Furthermore, in the case where the expression "acrylic" is used, this means a conception also including "methacrylic" unless this conception poses any problem from a commonsense standpoint.

Examples of the monofunctional (meth)acrylic monomer giving a homopolymer having a Tg of 0°C or higher, in the invention, include acryloylmorpholine, isobornyl acrylate, dicyclopentanyl acrylate, t-butyl acrylate, cyclohexyl acrylate, and lauryl acrylate. These monomers can be used alone or in combination of two or more thereof.

It is preferred in the invention that at least one monomer selected from the group consisting of acryloylmorpholine, isobornyl acrylate, and dicyclopentanyl acrylate is used as the monofunctional (meth)acrylic monomer giving a homopolymer having a Tg of 4°C or higher. It is more preferred to use acryloylmorpholine and/or isobornyl acrylate or to use acryloylmorpholine and/or dicyclopentanyl acrylate. It is especially preferred to use isobornyl acrylate.

The content of the monofunctional (meth)acrylic monomer giving a homopolymer having a Tg of 0°C or higher is preferably 20% by weight or more and 99% by weight or less, more preferably 30% by weight or more and 98% by weight or less, based on the acrylic ingredient. When the contents of the monofunctional (meth)acrylic monomer is lower than 20% by weight, there will be a case of causing a problem that the film has insufficient strength. When the content thereof exceeds 99% by weight, there will be a case where the film is too rigid and is brittle.

Examples of the monofunctional (meth)acrylic monomer giving a homopolymer having a Tg lower than 0°C, in the invention, include n-butyl acrylate, 2-ethylhexyl acrylate, isooctyl acrylate, isobutyl acrylate, 2-methoxyethyl acrylate, tetrahydrofurfuryl acrylate, phenoxyethyl acrylate, ethoxyethyl acrylate, and 3-methoxybutyl acrylate. These monomers can be used alone or in combination of two or more thereof.
It is especially preferred in the invention to use n-butyl acrylate as the monofunctional (meth)acrylic monomer giving a homopolymer having a Tg lower than 0°C.

The monofunctional (meth)acrylic monomer giving a homopolymer having a Tg lower than 0°C need not be contained (namely, the content thereof may be 0% by weight). However, when the monomer is contained, the content thereof is preferably more than 0% by weight and 50% by weight or less, and is more preferably more than 0% by weight and 45% by weight or less, based on the acrylic ingredient. When the content of this monofunctional (meth)acrylic monomer exceeds 50% by weight, there will be a case of causing a problem that the film has insufficient strength.

Kind, combination, using amount and the like of the (meth)acrylic monomer are decided accordingly by taking into consideration its compatibility with urethane, polymerization ability at the time of photo-curing with a radioactive ray and characteristics of the obtained polymer.

In the invention, the following monomers may be copolymerized with the (meth)acrylic monomers described above: vinyl acetate, vinyl propionate, styrene, acrylamide, methacrylamide, mono- or diesters of maleic acid and derivatives of these, N-methylolacrylamide, glycidyl acrylate, glycidyl methacrylate, N,N-dimethylaminoethyl acrylate, N,N-dimethylaminopropylmethacrylamide, 2-hydroxypropyl acrylate, N,N-dimethylacrylamide, N,N-diethylacrylamide, imidoacrylates, N-vinylpyrrolidone, oligoester acrylates, ε-caprolactone acrylate, dicyclopentanyl (meth)acrylate, dicyclopentenyl (meth)acrylate, methoxylated cyclododecatriene acrylate, methoxyethyl acrylate, and the like. The kinds of such monomers to be copolymerized and the amounts of the monomers to be used may be suitably determined while taking account of the properties of the composite film, etc.

In addition, other polyfunctional monomers can be added so long as this addition does not impair the properties. Examples of the polyfunctional monomers include ethylene glycol di(meth)acrylate, propylene glycol di(meth)acrylate, hexanediol di(meth)acrylate, neopentyl glycol di(meth)acrylate, trimethylolpropane tri(meth)acrylate, pentaerythritol tri(meth)acrylate, dipentaerythritol hexa(meth)acrylate, urethane acrylates, epoxy acrylates, and polyester acrylates. Especially preferred is trimethylolpropane tri(meth)acrylate.

Such polyfunctional monomers can be contained in an amount of 1 part by weight or more and 20 parts by weight or less per 100 parts by weight of the acrylic monomers. When the content of polyfunctional monomers is 1 part by weight or more, the composite film has sufficient cohesive force. When the content thereof is 20 parts by weight or less, the elastic modulus does not become too high and can follow irregularity of the adherend surface.

The urethane polymer is obtained by allowing a diol and a diisocyanate to undergo the reaction. A catalyst is generally used in the reaction of the hydroxyl group of diol with the diisocyanate, but according to the invention, the reaction can be accelerated without using dibutyl tin dilaurate, tin octenoate and the like catalysts which cause environmental load.

Examples of low-molecular diols include dihydric alcohols such as ethylene glycol, diethylene glycol, propylene glycol, butylene glycol, and hexamethylene glycol.

Examples of high-molecular diols include polyether polyols obtained by the addition polymerization of ethylene oxide, propylene oxide, tetrahydrofuran, or the like, and polyester polyols which are products of the polycondensation of an alcohol, such as any of those dihydric alcohols, 1,4-butanediol, 1,6-hexanediol, or the like, with a dibasic acid, such as adipic acid, azelaic acid, or sebacic acid, and further include acrylic polyols, carbonate polyols, epoxy polyols, and caprolactone polyols. Preferred of these are, for example, polyoxytetramethylene glycol (PTMG), poly(alkylene carbonate) diols (PCD), and the like.

Examples of the acrylic polyols include copolymers of monomers having a hydroxyl group and copolymers of a hydroxyl-containing substance and an acrylic monomer. Examples of the epoxy polyols include amine-modified epoxy resins.

In the invention, those diols can be used alone or in combination while taking account of solubility in the acrylic monomers, reactivity with the isocyanate, etc. In the case where strength is required, it is effective to increase the amount of hard urethane segments using a low-molecular diol. In the case where elongation is important, it is preferred that a diol having a high molecular weight is used alone. Polyether polyols generally are inexpensive and have satisfactory water resistance, while polyester polyols have high strength. In the invention, the kind of polyol and the amount thereof can be selected according to uses and purposes. Furthermore, the kind of polyol and the molecular weight and amount thereof can be suitably selected also from the standpoints of the properties of the substrate or the like to be coated, reactivity with the isocyanate, compatibility with the acrylic polymer, etc.

Examples of the diisocyanate include aromatic, aliphatic, and alicyclic diisocyanates and the dimers, trimers, and other polymers of these diisocyanates. Examples of the aromatic, aliphatic, and alicyclic diisocyanates include tolylene diisocyanate, diphenylmethane diisocyanate, hexamethylene diisocyanate, xylylene diisocyanate, hydrogenated xylylene diisocyanate (HXDI), isophorone diisocyanate, hydrogenated diphenylmethane diisocyanate, 1,5-naphthylene diisocyanate, 1,3-phenylene diisocyanate, 1,4-phenylene diisocyanate, butane 1,4-diisocyanate, 2,2,4-trimethylhexamethylene diisocyanate, 2,4,4-trimethylhexamethylene diisocyanate, cyclohexane 1,4-diisocyanate, dicyclohexylmethane 4,4-diisocyanate, 1,3-bis(isocyanatomethyl)cyclohexane, methylcyclohexane diisocyanate, and m-tetramethylxylylene diisocyanate. Examples thereof further include the dimers and trimers of these diisocyanates and polyphenylmethane diisocyanate. Examples of the trimers include the isocyanurate type, biuret type, and allophanate type; these isocyanates can be suitably used.

Those diisocyanates can be used alone or in combination thereof. The kinds of diisocyanates, a combination thereof, etc. may be suitably selected from the standpoints of the properties of the substrate or the like to which the composite film is applied (which is to be coated), solubility in the acrylic monomers, reactivity with hydroxyl groups, etc.

It is preferred in the invention that the urethane polymer is formed using at least one diisocyanate selected from the group consisting of hexamethylene diisocyanate (HDI), hydrogenated tolylene diisocyanate (HTDI), hydrogenated 4,4-diphenylmethane diisocyanate (HMDI), isophorone diisocyanate (IPDI), and hydrogenated xylene diisocyanate (HXDI).

In the invention, the amounts of the diol ingredient and diisocyanate ingredient to be used for forming the urethane polymer are as follows. The amount of the diol ingredient to be used relative to the isocyanate ingredient amount is such that the ratio of NCO/OH (equivalent ratio) is preferably 1.1 or more and 2.0 or less, more preferably 1.15 or more and 1.35 or less. In case where the ratio of NCO/OH (equivalent ratio) is smaller than 1.1, the film is apt to have reduced strength. So long as the ratio of NCO/OH (equivalent ratio) is 2.0 or less, elongation and flexibility can be sufficiently ensured.

A hydroxyl-containing acrylic monomer may be added to the urethane polymer. By adding a hydroxyl-containing acrylic monomer, a (meth)acryloyl group can be introduced into a molecular end of a urethane prepolymer and copolymerizability with the acrylic monomers is imparted thereto. As a result, compatibility between the urethane component and the acrylic component is enhanced, and an improvement in S-S characteristics such as a breaking strength can also be attained. As the hydroxyl-containing acrylic monomer, use may be made of hydroxyethyl (meth)acrylate, hydroxypropyl (meth)acrylate, hydroxybutyl (meth)acrylate, or hydroxyhexyl (meth)acrylate. The amount of the hydroxyl-containing acrylic monomer to be used is preferably 0.1 to 10 parts by weight, more preferably 1 to 5 parts by weight, per 100 parts by weight of the urethane polymer.

It is preferred in the invention that the composite film has a heterogeneous network structure. In the invention, a (meth)acrylic polymer or the like can be added according to need. It is, however, necessary that the pressure-sensitive adhesive sheet has a residual stress of 23 N/cm or lower after having been held in a 10% elongated state for 60 seconds. It is preferred that when a (meth)acrylic polymer is added, the composite film has a heterogeneous network structure in which the urethane polymer and the acrylic polymer are bonded to each other by means of a graft structure or crosslinked structure. When the urethane polymer and the acrylic polymer have an IPN structure (interpenetrating polymer network layer) in which the two polymers each independently have a crosslinked structure or have a semi-IPN structure in which one of the urethane polymer and acrylic polymer has a crosslinked structure and the other has linear polymer chains and has penetrated into the crosslinked structure, then there are cases where the pressure-sensitive adhesive sheet is less apt to have stress relaxation when elongated. Consequently, when the composite film has such a structure, there are cases where it is necessary to improve the applicability which is required when the pressure-sensitive adhesive sheet is used. For example, there are cases where formation of an application sheet is necessary.

Additives in general use, such as, for example, an ultraviolet absorber, aging inhibitor, filler, pigment, colorant, flame retardant, antistatic agent, and light stabilizer, can be added to the composite film or the like according to need within such a range that the effect of the invention is not spoiled. These additives may be used in ordinary amounts according to the kinds thereof. These additives may be added before the polymerization reaction of the diisocyanate with the diol, or may be added before the urethane polymer and the acrylic monomers are polymerized.

A small amount of a solvent may be added in the invention in order to regulate the viscosity of the coating fluid. The solvent may be suitably selected from solvents for common use. Examples thereof include ethyl acetate, toluene, chloroform, and dimethylformamide.

In the case where the composite film in the invention is a composite film including a (meth)acrylic polymer and a urethane polymer, this composite film may be produced, for example, in the following manner. Acrylic monomers are used as a diluent, and a diol is reacted with a diisocyanate in the acrylic monomers to form a urethane polymer. A mixture containing the acrylic monomers and the urethane polymer as main components is applied to a substrate (which is release-treated according to need) or the like, and is cured by irradiation with radiation, such as ionizing radiation, e.g., α-rays, β-rays, γ-rays, neutron beams, or electron beams, or ultraviolet rays, visible light, or the like according to the kind of photopolymerization initiator, etc. Thereafter, the substrate or the like is removed, whereby a composite film can be formed. Alternatively, the substrate or the like is not removed, and the composite film can be obtained in the form of a multilayer structure including the composite film superposed on the substrate or the like.

Specifically, a diol is dissolved in acrylic monomers, and a diisocyanate and other ingredients are added to the resultant solution to react the diisocyanate with the diol. The viscosity of this reaction mixture is regulated, and the resulting mixture is applied to a support or the like or, according to need, to a release-treated surface of a support or the like. Thereafter, the coating is cured using a low-pressure mercury lamp or the like. Thus, a composite film can be obtained. In this method, the acrylic monomers may be added at a time during urethane synthesis or may be added several times. Furthermore, the diol may be reacted after the diisocyanate is dissolved in the acrylic monomers. According to this method, there are no limitations on molecular weight and it is possible to yield a polyurethane having a high molecular weight. Consequently, the molecular weight of the urethane to be finally obtained can be designed so as to be any desired value.

In this case, polymerization inhibition by oxygen may be avoided by placing a release-treated sheet (e.g., a separator) on the mixture applied to a support or the like and thereby blocking oxygen, or by placing the substrate in a vessel filled with an inert gas and thereby reducing the concentration of oxygen.

In the invention, the kind of radiation or the like, the kind of lamp for use in the irradiation, and the like can be suitably selected. Use can be made of a low-pressure lamp such as a fluorescent chemical lamp, black light, or bactericidal lamp, a high-pressure lamp such as a metal halide lamp or a high-pressure mercury lamp, or the like.

The irradiation amount of ultraviolet rays or the like can be set according to the required film properties. In general, the irradiation amount of ultraviolet rays is 100 to 5,000 mJ/cm², preferably 1,000 to 4,000 mJ/cm², more preferably 2,000 to 3,000 mJ/cm². When the irradiation amount of ultraviolet rays is less than 100 mJ/cm², there are cases where a sufficient conversion is not obtained. When the irradiation amount thereof is larger than 5,000 mJ/cm², there are cases where such a large irradiation amount is causative of deterioration.

The temperature of the mixture being irradiated with ultraviolet rays or the like is not particularly limited, and can be set accordingly. However, since too high temperatures are apt to result in a termination reaction due to the heat of polymerization and are apt to be causative of a property decrease, the temperature thereof is generally 70°C or lower, preferably 50°C or lower, more preferably 30°C or lower.

In the invention, the mixture containing at least a urethane polymer (e.g., a mixture containing a urethane polymer and acrylic monomers as main components) contains a photopolymerization initiator. As the photopolymerization initiator, it is preferred to use a benzoin ether such as benzoin methyl ether or benzoin isopropyl ether, a substituted benzoin ether such as anisole methyl ether, a substituted acetophenone such as 2,2-diethoxyacetophenone or 2,2-dimethoxy-2-phenylacetophenone, a substituted α-ketol such as 1-hydroxycyclohexyl phenyl ketone or 2-methyl-2-hydroxypropiophenone, an aromatic sulfonyl chloride such as 2-naphthalenesulfonyl chloride, or an optically active oxime such as 1-phenyl-1,1-propanedione-2-(O-ethoxycarbonyl)oxime.

The film constituting the substrate layer in the invention is a film including at least a urethane polymer, and for example, a commercial film can be used. It is, however, necessary that the pressure-sensitive adhesive sheet obtained using this film satisfies the requirement that the pressure-sensitive adhesive sheet has a residual stress, i.e., a residual stress as measured after the pressure-sensitive adhesive sheet has been held in a 10% elongated state for 60 second, of 23 N/cm or lower.

The thickness of the substrate layer according to the invention is not particularly limited and can be suitably selected according to purposes, etc., for example, according to the kind and location of the adherend to be covered and protected, etc. However, the thickness thereof is preferably 100 µm or larger, more preferably 150 µm or larger, especially preferably 200 µm or larger. The thickness of the substrate layer is preferably 1,000 µm or smaller, more preferably 750 µm or smaller, especially preferably 500 µm or smaller. The thickness of the composite film constituting the substrate layer is preferably about 50 to 500 µm, more preferably about 100 to 300 µm, in the case where the pressure-sensitive adhesive sheet is for use in, for example, chipping prevention for protecting automotive bodies.

The pressure-sensitive adhesive sheet of the invention includes a substrate layer including the composite film or another film and a pressure-sensitive adhesive layer. Namely, the pressure-sensitive adhesive sheet has a pressure-sensitive adhesive layer on one surface or each surface of the substrate layer. The pressure-sensitive adhesive constituting the pressure-sensitive adhesive layer is not particularly limited, and a general pressure-sensitive adhesive such as, for example, a (meth)acrylic, rubber-based, or silicone pressure-sensitive adhesive can be used. However, an acrylic pressure-sensitive adhesive is preferred when low-temperature adhesiveness, high-temperature holding properties, cost, etc. are taken into account. Methods for forming a pressure-sensitive adhesive layer are also not particularly limited, and use can be made of a method in which a pressure-sensitive adhesive of the solvent-based or emulsion type is directly applied to a substrate and dried or a method in which any of those pressure-sensitive adhesives is applied to a release paper to form a pressure-sensitive adhesive layer beforehand and this pressure-sensitive adhesive layer is laminated to a composite film. Also usable is a method in which a radiation-curable pressure-sensitive adhesive is applied to a substrate and both the pressure-sensitive adhesive layer and the film are irradiated with radiation to thereby simultaneously cure the substrate and the pressure-sensitive adhesive layer and form the adhesive layer. In this case, a pressure-sensitive adhesive layer and a substrate layer may be formed through coating fluid application so as to result in a multilayer configuration.

The thickness of the pressure-sensitive adhesive layer is not particularly limited and can be set accordingly. Usually, however, the thickness thereof is preferably 20 µm or larger, more preferably 30 µm or larger, especially preferably 40 µm or larger. However, the upper limit thereof is generally preferably about 100 µm, and the thickness of the pressure-sensitive adhesive layer is more preferably 80 µm or smaller, especially preferably 70 µm or smaller.

The substrate layer as a component of the pressure-sensitive adhesive sheet of the invention can be one which is composed of a film including a urethane polymer (e.g., the composite film) and a surface coating layer formed on one surface of the film.
This substrate layer, however, must satisfy the requirement that the pressure-sensitive adhesive sheet has a residual stress of 23 N/cm or lower after having been held in a 10% elongated state for 60 seconds, and is required not to impair the effect of the invention, such as flexibility. The surface coating layer preferably is one including a fluororesin, a urethane resin, or a (meth)acrylic resin, from the standpoints of weather resistance, flexibility, etc. For example, it is preferred to form a layer of a fluoroethylene vinyl ether as the surface coating layer. Formation of a surface coating layer makes it possible to impart properties such as gloss, wear resistance, antifouling properties, and water repellency, and is effective also in inhibiting the deterioration of the composite film itself or the like. In the case where the substrate layer has a surface coating layer, it is preferred to employ a configuration which includes the surface coating layer disposed on one surface of the composite film or the like and a pressure-sensitive adhesive layer disposed on the other surface thereof.

The thickness of the coating layer is preferably 2 to 50 µm, more preferably 5 to 40 µm, even more preferably 8 to 30 µm. In case where the thickness of the coating layer is smaller than 2 µm, defective areas not covered with the coating layer, such as pin-holes, are apt to result and there are cases where the properties of the coating layer are not sufficiently exhibited. When the thickness thereof exceeds 50 µm, there are cases where the properties of this coating layer reduce the properties of the composite film.

The substrate layer in the invention can be one which is composed of the film including at least a urethane polymer (e.g., the composite film) and other film (s) laminated to one or each surface thereof, so long as this configuration does not impair the effect of the invention, such as flexibility. Examples of the material constituting the other film include thermoplastic resins such as polyester resins, e.g., poly(ethylene terephthalate) (PET), polyolefin resins, e.g., polyethylene (PE) and polypropylene (PP), polyimides (PI), polyetheretherketones (PEEK), poly(vinyl chloride) (PVC), poly(vinylidene chloride) resins, polyamide resins, polyurethane resins, polystyrene resins, acrylic resins, fluororesins, cellulosic resins, and polycarbonate resins and thermosetting resins. In the case where the coating layer is to be formed, it is preferred to dispose the coating layer as an outermost layer of the substrate layer.

In the invention, the pressure-sensitive adhesive sheet, which includes the substrate layer and a pressure-sensitive adhesive layer, must have a residual stress of 23 N/cm or lower in a tensile test after having been held in a 10% elongated state for 60 seconds. The residual stress thereof is preferably 20 N/cm or lower, especially preferably 15 N/cm or lower. It is preferred that the tensile test is conducted, for example, under the conditions of 23°C. In case where the pressure-sensitive adhesive sheet has a residual stress exceeding 23 N/cm, since flexibility for accommodating bending cannot be sufficiently ensured, adhesiveness for bending parts or curved areas may lower.

In the case where the pressure-sensitive adhesive sheet is applied at places having a low air temperature, as at the outdoors, it is preferred to take account of low-temperature modulus. At a temperature of 5°C, for example, the pressure-sensitive adhesive layer has an increased cohesive force. Consequently, a different modulus value should be set. In the invention, the 10% modulus of the pressure-sensitive adhesive sheet at 5°C is preferably 80 N/cm or lower, more preferably 70 N/cm or lower, especially preferably 60 N/cm or lower. However, the 10% modulus of the pressure-sensitive adhesive sheet at 5°C is preferably 3 N/cm or higher, more preferably 5 N/cm or higher. When the 10% modulus of the pressure-sensitive adhesive sheet at 5°C is 80 N/cm or lower, this pressure-sensitive adhesive sheet shows satisfactory low-temperature applicability, adhesiveness to irregular surfaces, etc.

The pressure-sensitive adhesive sheet of the invention has a 100% modulus at 23°C of preferably 8 N/cm or higher, more preferably 10 N/cm or higher, especially preferably 12 N/cm or higher. The 100% modulus at 23°C of the pressure-sensitive adhesive sheet is preferably 250 N/cm or lower, more preferably 200 N/cm or lower. In case where the 100% modulus thereof is lower than 8 N/cm, this pressure-sensitive adhesive sheet is apt to deform and this may arouse troubles, for example, that position shifting occurs during application and that the pressure-sensitive adhesive sheet, when reapplied, deforms, thereby being unusable. However, in an embodiment in which the pressure-sensitive adhesive sheet has the application sheet which will be described later, there is no particular limitation on 100% modulus so long as the pressure-sensitive adhesive sheet has a residual stress of 23 N/cm or lower after having been held in a 10% elongated state for 60 seconds.

The pressure-sensitive adhesive sheet of the invention has a breaking strength of preferably 40 N/cm or higher, more preferably 50 N/cm or higher, especially preferably 60 N/cm or higher. In general, however, the breaking strength thereof is preferably 300 N/cm or lower, more preferably 250 N/cm or lower. When the breaking strength of the pressure-sensitive adhesive sheet for coating film protection is lower than 40 N/cm, there are cases where troubles such as breakage of the pressure-sensitive adhesive sheet arise.

It is preferred that the pressure-sensitive adhesive sheet of the invention has predetermined adhesion strength. For example, the adhesion strength thereof to an acrylic plate is preferably 3 N/cm or higher, more preferably 5 N/cm or higher, even more preferably 6 N/cm or higher, especially preferably 7 N/cm or higher. Usually, however, the adhesion strength thereof is preferably 100 N/cm or lower, more preferably 70 N/cm or lower. When the pressure-sensitive adhesive sheet has an adhesion strength to an acrylic plate of 5 N/cm or higher, this pressure-sensitive adhesive sheet can be applied to irregular surfaces and curved areas of vinyl chloride-coated parts even in a low-temperature environment while exhibiting sufficient adhesiveness. In case where the adhesion strength thereof is too high, it is difficult to re-apply this pressure-sensitive adhesive sheet when position shifting or entrapment of dust particles or air bubbles has occurred.

The pressure-sensitive adhesive sheet of the invention can further have an application sheet besides the substrate layer and pressure-sensitive adhesive layer described above. The application sheet is effectively utilized for, for example, positioning in application in order to improve the efficiency of the operation for applying the pressure-sensitive adhesive sheet. The application sheet is superposed on the surface on the opposite side from the surface where the pressure-sensitive adhesive layer has been formed. In the case of the configuration in which the substrate layer includes a surface coating layer, the application sheet is superposed on the surface coating layer.

Examples of the application sheet for use in the invention include a pressure-sensitive adhesive sheet obtained by applying a rubber-based pressure-sensitive adhesive, acrylic pressure-sensitive adhesive, or the like to a film or the like made of an olefin resin, e.g., polypropylene (PP) or polyethylene (PE), a vinyl chloride resin, a polyester resin, or the like. Although a commercial application sheet may be used, it is preferred that the embodiment of the pressure-sensitive adhesive sheet for coating film protection which includes an application sheet should be regulated so as to have a 10% modulus at 23°C of 35 N/cm or lower.

It is preferred in the invention that the application sheet should be easily releasable after use. For example, the adhesion strength between the application sheet and the substrate layer is preferably 6 N/25 mm or lower, more preferably 4.5 N/25 mm or lower, especially preferably 3 N/25 mm or lower. However, the adhesion strength is preferably 0.1 N/25 mm or higher, more preferably 0.2 N/25 mm or higher. In case where the adhesion strength between the application sheet and the substrate layer is higher than 6 N/25 mm, there is a possibility that when the application sheet is released after this pressure-sensitive adhesive sheet is applied in a predetermined position on an adhered, the pressure-sensitive adhesive sheet might be lifted up from the adherend. In case where the adhesion strength thereof is lower than 0.1 N/25 mm, there is a possibility that lifting might occur before application. This pressure-sensitive adhesive sheet has an adhesion strength to an acrylic plate of preferably 5 N/cm or higher, more preferably 6 N/cm or higher, especially preferably 7 N/cm or higher. When the adhesion strength thereof is lower than 5 N/cm, there are cases where this pressure-sensitive adhesive sheet cannot be sufficiently adhered to the irregular surfaces or curved areas of vinyl chloride-coated parts when applied at low temperatures. There also is a possibility that this pressure-sensitive adhesive sheet might be lifted up from the adherend when the application sheet is released.

A process for producing the pressure-sensitive adhesive sheet of the invention is described below. For example, a coating fluid for composite film formation is first applied to the release-treated surface of a poly(ethylene terephthalate) film (provisional support 1) which has undergone a release treatment, and a transparent separator or the like is placed thereon. The resultant stack is irradiated from above with ultraviolet rays or the like to form a composite film, and the separator is removed thereafter. Separately therefrom, a coating fluid for pressure-sensitive adhesive layer formation is applied to the release-treated surface of a polyester film (provisional support 2) which has undergone a release treatment, thereby forming a pressure-sensitive adhesive layer. Thereafter, this pressure-sensitive adhesive layer is superposed on the surface of the composite film. Thus, a pressure-sensitive adhesive sheet for coating film protection including a substrate layer and a pressure-sensitive adhesive layer can be obtained. The resulting layer configuration is: release-treated poly(ethylene terephthalate) film (provisional support 1)/composite film/pressure-sensitive adhesive layer/release-treated polyester film (provisional support 2). However, the provisional support 1 and the provisional support 2 are will be released and removed when this pressure-sensitive adhesive sheet is used, i.e., when the pressure-sensitive adhesive sheet is applied, and hence are not especially included in the configuration of the pressure-sensitive adhesive sheet for coating film protection of the invention. It is, however, possible to suitably dispose the provisional support 1 and provisional support 2 or the like according to need, and such configurations are within the technical scope of the invention.

In the case where the substrate layer according to the invention includes a surface coating layer, the production process described above may be modified so that the substrate layer is formed by applying a coating fluid for surface coating layer formation to the provisional support I to form a surface coating layer, subsequently applying a coating fluid for composite film formation thereto, and then placing a separator or the like thereon and forming a composite film.

The pressure-sensitive adhesive sheet further having an application sheet can be produced by producing a pressure-sensitive adhesive sheet including a substrate layer and a pressure-sensitive adhesive layer in the same manner as described above, thereafter releasing and removing the provisional support 1 provisionally adherent to the substrate layer, and then laminating an application sheet to the exposed surface of the substrate layer. Incidentally, in the case where the substrate layer is constituted of a composite film or the like alone, an application sheet is superposed on the surface of the composite film or the like. In the case where the substrate includes a surface coating layer, an application sheet is superposed on the surface coating layer.

The pressure-sensitive adhesive sheet of the invention can combine high strength and high breaking elongation, has excellent flexibility for bending and curved areas, and has excellent adhesiveness to curved areas. The pressure-sensitive adhesive sheet is hence suitable for use as, for example, a protective pressure-sensitive adhesive sheet for protecting the coated surfaces of motor vehicles, airplanes, etc. For example, this pressure-sensitive adhesive sheet can be used by applying the adhesive sheet to an adhered such as, for example, the coated surface of a motor vehicle, a building, etc.

### EXAMPLES

The invention will be explained below in detail by reference to Examples, but the invention should not be construed as being limited thereto. In the following Examples, "parts" means parts by weight and "%" means % by weight, unless otherwise indicated. The measurement methods and evaluation methods used in the following Examples are shown below.

### (Measurement Methods and Evaluation Methods)

### (1) Residual Stress

A pressure-sensitive adhesive sheet in the state of having provisional supports attached thereto was cut into a size of 1 cm (width) x 13 cm (length), and the provisional support 1 (or application sheet) and the provisional support 2 were removed thereafter. "Autograph ASG-50D" (manufactured by Shimadzu Corp.) was used as a tensile tester to conduct a tensile test under the conditions of a pulling rate of 100 mm/min, a chuck-to-chuck distance of 100 mm, and 23°C, in which the pressure-sensitive adhesive sheet was held for 1 minute in a 10% elongated state (elongated by 10 mm) and the resultant stress was determined.

### (2) Measurement of 100% Modulus

A pressure-sensitive adhesive sheet in the state of having provisional supports attached thereto was cut into a size of 1 cm (width) x 13 cm (length), and the provisional support 1 (or application sheet) and the provisional support 2 were removed thereafter. "Autograph ASG-50D" (manufactured by Shimadzu Corp.) was used as a tensile tester to conduct a tensile test under the conditions of a pulling rate of 200 mm/min, a chuck-to-chuck distance of 50 mm, and 23°C to determine a stress-strain curve. The stress of the pressure-sensitive adhesive sheet in a 100% elongated state (elongated by 50 mm) was taken as 100% modulus at 23°C (RT-100% modulus).

### (3) Bending Test

A pressure-sensitive adhesive sheet in the state of having provisional supports attached thereto was cut into a size of 1 cm (width) × 5 cm (length), and the provisional support 1 (or application sheet) and the provisional support 2 were removed thereafter. One end of the cut pressure-sensitive adhesive sheet was applied, so as to result in an adhesion length of 1 mm, to a plate coated with a baked acrylic (one surface was white) (steel plate thickness, 1.0 mm) (manufactured by Nippon Testpanel Co., Ltd.) which had been cleaned with isopropyl alcohol. The pressure-sensitive adhesive sheet was folded back in the 180° direction with respect to the steel plate surface while holding the other end. The pressure-sensitive adhesive sheet in this state was held for 1 hour, and whether lifting of the pressure-sensitive adhesive sheet from the coating surface had occurred or not was visually examined. The samples in which lifting of the pressure-sensitive adhesive sheet was unable to be observed are indicated by "A", while the sample in which lifting of the pressure-sensitive adhesive sheet had occurred is indicated by "B".

### (4) Applicability

A pressure-sensitive adhesive sheet in the state of having provisional supports attached thereto was cut into a size of 1 cm (width) × 13 cm (length), and the provisional support 1 and the provisional support 2 were removed thereafter. The pressure-sensitive adhesive layer surface of the pressure-sensitive adhesive sheet was superposed on a methacrylic plate (Acrylite, manufactured by Mitsubishi Rayon Co., Ltd.) which had been cleaned with isopropyl alcohol, and this pressure-sensitive adhesive sheet was press-bonded thereto with a hand roller. The samples which were able to be applied entirely linearly are indicated by "A", and the samples which were applied in a curved state are indicated by "B".

### (EXAMPLE 1)

### Production of Coating Fluid for Composite Film Formation

Into a reaction vessel equipped with a condenser, thermometer, and stirrer were introduced 5 parts of acrylic acid (AA), 35.5 parts of isobornyl acrylate (IBXA), and 9.5 parts of n-butyl acrylate (BA) as acrylic monomers and 36.4 parts of polyoxytetramethylene glycol (PTMG) (number-average molecular weight, 650; manufactured by Mitsubishi Chemical Corp.) as a polyol. While the mixture was being stirred, 13.6 parts of hydrogenated xylylene diisocyanate (HXDI) was added dropwise thereto and reacted at 65°C for 10 hours. Thereafter, 2 parts of 4-hydroxybutyl acrylate was added dropwise thereto and then reacted at 65°C for 1 hour to obtain a urethane polymer/acrylic monomer mixture.

Thereto were added 3 parts of trimethylolpropane triacrylate as a crosslinking agent, 0.159 parts of bis(2,4,6-trimethylbenzoyl)phenylphosphine oxide ("IRGACURE 819", manufactured by Ciba Japan K.K.) as a photopolymerization initiator, 1.25 parts of an ultraviolet absorber ("TINUVIN 400", manufactured by Ciba Japan K.K.) composed of 1-methoxy-2-propanol and a product of reaction of 2-(4,6-bis(2,4-dimethylphenyl)-1,3,5-triazin-2-yl)-5-hydroxyphenyl with oxiranes [(C10-C16, mainly C12-C13, alkyloxy)methyloxiranes], and 1.25 parts of a product ("TINUVIN 123", manufactured by Ciba Japan K.K.) of the reaction of bis(2,2,6,6-tetramethyl-1-octyloxy-4-piperidinyl) decanedioate, 1,1-dimethylethyl hydroperoxide, and octane as a light stabilizer. Thus, a mixture of a urethane polymer and acrylic monomers (coating fluid for composite film formation) was obtained.

### Production of Coating Fluid for Surface Coating Layer Formation

To 100 parts of a solution of fluoroethylene vinyl ether in xylene and toluene ("LF600", manufactured by Asahi Glass Co., Ltd.; solid content, 50% by weight) were added 10.15 parts of an isocyanate crosslinking agent ("Coronate HX", manufactured by Nippon Polyurethane Co., Ltd.) as a curing agent, 3.5 parts of a xylene dilution of dibutyltin laurate (solid concentration, 0.01%) as a catalyst, and 101 parts of toluene as a diluent. Thus, a coating fluid for surface coating layer formation (solid content, 28%) was produced.

### Formation of Substrate Layer

The coating fluid for surface coating layer formation obtained was applied to a release-treated poly(ethylene terephthalate) film (thickness, 75 µm) as a provisional support 1, and then dried and cured at a temperature of 140°C for 3 minutes to form a fluoroethylene vinyl ether layer. After the drying, the surface coating layer had a thickness of 10 µm.

The coating fluid for composite film formation produced above was applied to the surface coating layer obtained, in such an amount as to result in a thickness after cure of 190 µm (or 200 µm when the thickness of the surface coating layer was included). A release-treated poly(ethylene terephthalate) (PET) film was superposed as a separator thereon. The PET film side was irradiated with ultraviolet rays using a metal halide lamp (illuminance: 290 mW/cm²; irradiation amount: 4,600 mJ/cm²) to cure the coating fluid and thereby form a composite film (equipped with the surface coating layer) on the provisional support 1. Thereafter, the release-treated poly(ethylene terephthalate) film (separator) was released, and the exposed layer was dried at 140°C for 3 minutes to remove acrylic monomers remaining unreacted, thereby obtaining a substrate layer.

### Formation of Pressure-Sensitive Adhesive Layer

90 parts of isononyl acrylate and 10 parts of acrylic acid were mixed together as monomer ingredients. To the resultant mixture were added 0.05 parts of trade name "IRGACURE 651" (manufactured by Ciba Japan K.K.) and 0.05 parts of trade name "IRGACURE 184" (manufactured by Ciba Japan K.K.) as photopolymerization initiators. Thereafter, this mixture was irradiated with ultraviolet rays until the viscosity thereof reached about 15 Pa·s (BH viscometer; rotor No. 5; 10 rpm; measuring temperature, 30°C) to produce an acrylic composition (UV syrup) in which polymerization had partially proceeded.

To 100 parts of the UV syrup obtained were added 0.2 parts of trimethylolpropane triacrylate and 1 part of a hindered phenol type antioxidant (trade name "IRGANOX 1010", manufactured by Ciba Japan K.K.). Thus, a pressure-sensitive adhesive composition was produced.

The pressure-sensitive adhesive composition was applied to the release-treated surface of a polyester film having a thickness of 38 µm as a provisional support 2, in such an amount as to result in a thickness thereof in the final product of 50 µm.
A release-treated PET film was superposed as a separator thereon to cover the pressure-sensitive adhesive composition. Subsequently, the PET film side was irradiated with ultraviolet rays using a metal halide lamp (illuminance: 290 mW/cm²; irradiation amount: 4,600 mJ/cm²) to cure the pressure-sensitive adhesive composition, thereby forming a pressure-sensitive adhesive layer on the provisional support 2. Thereafter, the release-treated PET film was released, and the exposed layer was dried at 140°C for 3 minutes to remove acrylic monomers remaining unreacted, thereby forming a pressure-sensitive adhesive layer.

### Production of Pressure-Sensitive Adhesive Sheet

The pressure-sensitive adhesive layer was laminated to the substrate layer obtained above, so that the pressure-sensitive adhesive layer was superposed on the surface of the substrate layer on the opposite side from the surface coating layer. Thus, a pressure-sensitive adhesive sheet (having the layer configuration: provisional support 1/surface coating layer/composite film/pressure-sensitive adhesive layer/provisional support 2) was produced.

### Measurements and Evaluation

The pressure-sensitive adhesive sheet obtained was examined and evaluated for residual stress, 100% modulus, bending test, and applicability according to the measurement methods and evaluation methods shown above. The results thereof are shown in Table 1.

### (EXAMPLE 2)

A pressure-sensitive adhesive sheet was produced in the same manner as in Example 1, except that the coating fluid for composite film formation was replaced with the coating fluid shown below and that the thickness of the composite film was changed to 290 µm (or 300 µm when the thickness of the surface coating layer was included).

### Production of Coating Fluid for Composite Film Formation

Into a reaction vessel equipped with a condenser, thermometer, and stirrer were introduced 6.3 parts of acrylic acid (AA), 27.5 parts of isobornyl acrylate (IBXA), and 8.4 parts of n-butyl acrylate (BA) as acrylic monomers and 26.7 parts of polyoxytetramethylene glycol (PTMG) (number-average molecular weight, 650; manufactured by Mitsubishi Chemical Corp.) and 3.6 parts of 1,4-butanediol as polyols. While the mixture was being stirred, 27.5 parts of hydrogenated xylylene diisocyanate (HXDI) was added dropwise thereto and reacted at 65°C for 10 hours. Thereafter, 3.3 parts of 2-hydroxyethyl acrylate was added dropwise thereto and then reacted at 65°C for 1 hour to obtain a urethane polymer/acrylic monomer mixture.

Thereto were added 0.13 parts of bis(2,4,6-trimethylbenzoyl)phenylphosphine oxide ("IRGACURE 819", manufactured by Ciba Japan K.K.) as a photopolymerization initiator, 1.25 parts of an ultraviolet absorber formed from 2,5-hydroxyphenyl and oxirane-1-methoxy-2-propanol ("TINUVIN 400", manufactured by Ciba Japan K.K.), and 1.25 parts of a hindered amine type light stabilizer formed from a bisester of decanedioic acid, 1,1-dimethylethyl hydroperoxide, and octane ("TINUVIN 123", manufactured by Ciba Japan K.K.) as a light stabilizer. Thus, a mixture of a urethane polymer and acrylic monomers (coating fluid for composite film formation) was obtained.

The pressure-sensitive adhesive sheet obtained was subjected to the same measurements and evaluation as in Example 1. The results thereof are shown in Table 1.

### (EXAMPLE 3)

A pressure-sensitive adhesive sheet was produced in the same manner as in Example 1, except that the substrate layer was replaced with a commercial urethane film ("Esmer URS-PXN", manufactured by Nihon Matai Co., Ltd.; thickness, 220 µm).
The pressure-sensitive adhesive sheet obtained was subjected to the same measurements and evaluation as in Example 1. The results thereof are shown in Table 1.

### (EXAMPLE 4)

A pressure-sensitive adhesive sheet was produced in the same manner as in Example 1, except that the coating fluid for composite film formation was replaced with the coating fluid shown below.

### Production of Coating Fluid for Composite Film Formation

Into a reaction vessel equipped with a condenser, thermometer, and stirrer were introduced 7.5 parts of acrylic acid (AA), 19.8 parts of isobornyl acrylate (IBXA), and 17.7 parts of n-butyl acrylate (BA) as acrylic monomers and 37.1 part of polyoxytetramethylene glycol (PTMG) (number average molecular weight, 650; manufactured by Mitsubishi Chemical Corp.) and 1.7 parts of 1,4-butanediol as polyols.
While the mixture was being stirred, 16.2 parts of hydrogenated xylylene diisocyanate (HXDI) was added dropwise thereto and reacted at 65°C for 10 hours to obtain a urethane polymer/acrylic monomer mixture.

Thereto were added 0.14 parts of bis(2,4,6-trimethylbenzoyl)phenylphosphine oxide ("IRGACURE 819", manufactured by Ciba Japan K.K.) as a photopolymerization initiator, 1.25 parts of an ultraviolet absorber formed from 2,5-hydroxyphenyl and oxirane-1-methoxy-2-propanol ("TINUVIN 400", manufactured by Ciba Japan K.K.), and 1.25 parts of a hindered amine type light stabilizer formed from a bisester of decanedioic acid, 1,1-dimethylethyl hydroperoxide, and octane ("TINUVIN 123", manufactured by Ciba Japan K.K.) as a light stabilizer. Thus, a mixture of a urethane polymer and acrylic monomers (coating fluid for composite film formation) was obtained. This coating fluid for composite film formation was used to produce a pressure-sensitive adhesive sheet.

The pressure-sensitive adhesive sheet obtained was subjected to the same measurements and evaluation as in Example 1. The results thereof are shown in Table 1.

### (EXAMPLE 5)

An application sheet ("SPV-214", manufactured by Nitto Denko Corp.) was laminated to the surface coating layer of the pressure-sensitive adhesive sheet obtained in Example 4. Thus, a pressure-sensitive adhesive sheet was produced.

The procedure was as follows. A coating fluid for surface coating layer formation produced in the same manner as in Example 4 was applied to a provisional support 1 and then dried and cured at a temperature of 140°C for 3 minutes to form a fluoroethylene vinyl ether layer. After the drying, the surface coating layer had a thickness of 10 µm. A coating fluid for composite film formation produced in the same manner as in Example 4 was applied to the resultant surface coating layer in the same manner as in Example 4 to produce a composite film, thereby obtaining a substrate layer (equipped with the surface coating layer). Furthermore, a pressure-sensitive adhesive layer produced in the same manner as in Example 4 was laminated to the composite film.
Subsequently, the provisional support 1 provisionally adherent to the substrate layer was released and removed, and an application sheet ("SPV-214", manufactured by Nitto Denko Corp.) was laminated to the surface of the surface coating layer. Thus, a pressure-sensitive adhesive sheet (having the layer configuration: application sheet/surface coating layer/composite film/pressure-sensitive adhesive layer/provisional support 2) was produced.
The pressure-sensitive adhesive sheet obtained was subjected to the same measurements and evaluation as in Example 1. The results thereof are shown in Table 1.

### (EXAMPLE 6)

A pressure-sensitive adhesive sheet was produced in the same manner as in Example 1, except that the coating fluid for composite film formation was replaced with the coating fluid shown below.

### Production of Coating Fluid for Composite Film Formation

Into a reaction vessel equipped with a condenser, thermometer, and stirrer were introduced 41.0 parts of isobornyl acrylate (IBXA) and 9.0 parts of n-butyl acrylate (BA) as acrylic monomers and 36.7 parts of polyoxytetramethylene glycol (PTMG) (number-average molecular weight, 650; manufactured by Mitsubishi Chemical Corp.) and 0.6 parts of trimethylolpropane as polyols. While the mixture was being stirred, 0.8 parts of a dibutyltin laurate solution in isobornyl acrylate (IBXA), the solution having a solid content of 10%, and 12.8 parts of hydrogenated xylylene diisocyanate (HXDI) were added dropwise thereto and reacted at 65°C for 30 minutes. Thus, a urethane polymer/acrylic monomer mixture was obtained.

Thereto were added 3 parts of trimethylolpropane triacrylate as a crosslinking agent, 0.14 parts of bis(2,4,6-trimethylbenzoyl)phenylphosphine oxide ("IRGACURE 819", manufactured by Ciba Japan K.K.) as a photopolymerization initiator, 1.25 parts of an ultraviolet absorber formed from 2,5-hydroxyphenyl and oxirane-1-methoxy-2-propanol ("TINUVIN 400", manufactured by Ciba Japan K.K.), and 1.25 parts of a hindered amine type light stabilizer formed from a bisester of decanedioic acid, 1,1-dimethylethyl hydroperoxide, and octane ("TINUVIN 123", manufactured by Ciba Japan K.K.) as a light stabilizer. Thus, a mixture of a urethane polymer and acrylic monomers (coating fluid for composite film formation) was obtained. The composite film obtained from this coating fluid for composite film formation had an IPN structure.

The pressure-sensitive adhesive sheet obtained was subjected to the same measurements and evaluation as in Example 1. The results thereof are shown in Table 1.

### (EXAMPLE 7)

An application sheet ("SPV-214", manufactured by Nitto Denko Corp.) was laminated to the surface coating layer of the pressure-sensitive adhesive sheet obtained in Example 6. Thus, a pressure-sensitive adhesive sheet (having the layer configuration: application sheet/surface coating layer/composite film/pressure-sensitive adhesive layer/provisional support 2) was produced.
The pressure-sensitive adhesive sheet obtained was subjected to the same measurements and evaluation as in Example 1. The results thereof are shown in Table 1.

### (COMPARATIVE EXAMPLE 1)

A pressure-sensitive adhesive sheet was produced in the same manner as in Example 1, except that the coating fluid for composite film formation was replaced with the coating fluid shown below.

### Production of Coating Fluid for Composite Film Formation

Into a reaction vessel equipped with a condenser, thermometer, and stirrer were introduced 6.3 parts of acrylic acid (AA), 27.1 part of isobornyl acrylate (IBXA), and 8.4 parts of n-butyl acrylate (BA) as acrylic monomers and 25.9 parts of polyoxytetramethylene glycol (PTMG) (number-average molecular weight, 650; manufactured by Mitsubishi Chemical Corp.) and 3.5 parts of 1,4-butanediol as polyols. While the mixture was being stirred, 28.8 parts of hydrogenated xylylene diisocyanate (HXDI) was added dropwise thereto and reacted at 65°C for 10 hours. Thereafter, 4.5 parts of 2-hydroxyethyl acrylate was added dropwise thereto and then reacted at 65°C for 1 hour to obtain a urethane polymer/acrylic monomer mixture.

Thereto were added 0.12 parts of bis(2,4,6-trimethylbenzoyl)phenylphosphine oxide ("IRGACURE 819", manufactured by Ciba Japan K.K.) as a photopolymerization initiator, 1.25 parts of an ultraviolet absorber formed from 2,5-hydroxyphenyl and oxirane-1-methoxy-2-propanol ("TINUVIN 400", manufactured by Ciba Japan K.K.), and 1.25 parts of a hindered amine type light stabilizer formed from a bisester of decanedioic acid, 1,1-dimethylethyl hydroperoxide, and octane ("TINUVIN 123", manufactured by Ciba Japan K.K.) as a light stabilizer. Thus, a mixture of a urethane polymer and acrylic monomers (coating fluid for composite film formation) was obtained.

The pressure-sensitive adhesive sheet obtained was subjected to the same measurements and evaluation as in Example 1. The results thereof are shown in Table 1.

**Table 1**

| | Example 1 | Example 2 | Example 3 | Example 4 | Example 5 | Example 6 | Example 7 | Comparative Example 1 |
|---|---|---|---|---|---|---|---|---|
| Residual stress [N/cm] | 1.1 | 14.5 | 2.9 | 1.6 | 1.6 | 4.0 | 4.0 | 23.5 |
| 100% Modulus [N/cm] | 12.2 | 44.7 | 17.0 | 4.2 | 4.2 | 7.8 | 7.8 | 58.4 |
| Bending test | A | A | A | A | A | A | A | B |
| Applicability | A | A | A | B | A | B | A | A |

As is clear from Table 1, the pressure-sensitive adhesive sheets of Examples 1 to 7, which had a residual stress of 23 N/cm or lower after having been held in a 10% elongated state for 60 seconds, were found to show no lifting in the bending test and give satisfactory results. Furthermore, the pressure-sensitive adhesive sheets of Examples 1 to 7 were highly flexible, had excellent flexibility for bending and curved areas, and showed satisfactory adhesion to curved areas. Although the pressure-sensitive adhesive sheets of Example 4 and Example 6, which had a 100% modulus of 8 N/cm or lower, were inferior in the evaluation of applicability, the problem concerning applicability encountered in application operations was able to be eliminated by disposing an application sheet.

On the other hand, the pressure-sensitive adhesive sheet of Comparative Example 1, which had a residual stress exceeding 23 N/cm after having been held in a 10% elongated state for 60 seconds, was found to show lifting in the bending test, be inferior in flexibility for bending and curved areas, and have considerably poor adhesiveness to curved areas.

According to the invention, pressure-sensitive adhesive sheets having excellent flexibility and pressure-sensitive adhesive sheets having excellent adhesiveness to curved areas were able to be provided.

While the invention has been described in detail with reference to specific embodiments thereof, it will be apparent to one skilled in the art that various changes and modifications can be made therein without departing from the spirit and scope thereof.
Incidentally, the present application is based on Japanese Patent Application No. 2009-262805 filed on November 18, 2009, and the contents are incorporated herein by reference.
All references cited herein are incorporated by reference herein in their entirety.
Also, all the references cited herein are incorporated as a whole.

The pressure-sensitive adhesive sheet of the invention is suitable for use as a pressure-sensitive adhesive sheet required to have flexibility for curved surfaces, etc. For example, the adhesive sheet can be used as a pressure-sensitive adhesive sheet for protecting the surface of a coating film to be exposed to any of harmful environments including outdoor climates, solvents, dust, fats and oils, marine environments, and the like. The adhesive sheet is suitable also for use as a pressure-sensitive adhesive sheet for protecting the coating film of a motor vehicle.

## Claims

1. A pressure-sensitive adhesive sheet comprising: a substrate layer comprising a film which contains at least a urethane polymer; and a pressure-sensitive adhesive layer disposed on at least one side of the substrate layer,
wherein the pressure-sensitive adhesive sheet has a residual stress of 23 N/cm or lower after having been held in a 10% elongated state for 60 seconds, and
wherein the substrate layer has, on at least one side thereof, a surface coating layer comprising a fluororesin, a urethane resin or a (meth)acrylic resin.

2. The pressure-sensitive adhesive sheet according to claim 1,
wherein the film is a composite film comprising a (meth)acrylic polymer and the urethane polymer.

3. The pressure-sensitive adhesive sheet according to claim 2,
wherein the composite film has a heterogeneous network structure constituted of the (meth)acrylic polymer and the urethane polymer.

4. The pressure-sensitive adhesive sheet according to claim 2 or 3,
wherein the (meth)acrylic polymer is produced using an acrylic ingredient which includes at least a (meth)acrylic acid monomer and a monofunctional (meth)acrylic monomer.

5. The pressure-sensitive adhesive sheet according to claim 4,
wherein the monofunctional (meth)acrylic monomer includes a monofunctional (meth)acrylic monomer which gives a homopolymer having a glass transition temperature (Tg) of 0°C or higher.

6. The pressure-sensitive adhesive sheet according to claim 4 or 5,
wherein the acrylic ingredient further includes a monofunctional (meth)acrylic monomer which gives a homopolymer having a glass transition temperature (Tg) lower than 0°C.

7. The pressure-sensitive adhesive sheet according to any one of claims 4 to 6,
wherein the (meth)acrylic acid monomer is a (meth)acrylic monomer having a carboxyl group.

8. The pressure-sensitive adhesive sheet according to any one of claims 2 to 7,
wherein the composite film is formed from a composite film precursor including the (meth)acrylic acid monomer and the urethane polymer, and the (meth)acrylic acid monomer is contained in an amount of 1% by weight or more and 15% by weight or less in the composite film precursor.

9. The pressure-sensitive adhesive sheet according to any one of claims 1 to 8, which has a 100% modulus at 23°C of 8 N/cm or higher.

10. The pressure-sensitive adhesive sheet according to any one of claims 1 to 9, which has a breaking strength of 40 N/cm or higher.

11. The pressure-sensitive adhesive sheet according to any one of claims 1 to 10, which has an adhesion strength to an acrylic plate of 3 N/cm or higher.

12. The pressure-sensitive adhesive sheet according to any one of claims 1 to 10, which has an application sheet on at least one side of the pressure-sensitive adhesive sheet.

13. The pressure-sensitive adhesive sheet according to claim 12,
wherein an adhesion strength between the application sheet and the substrate layer is 6 N/25 mm or lower.

14. The pressure-sensitive adhesive sheet according to any one of claims 1 to 13, which is to be used as a protective sheet fro protecting a surface of an adherend.
